# EUROPEAN PATENT APPLICATION

(11) **EP 4 614 404 A1**
(43) Date of publication of application: **10.09.2025**
(21) Application number: 25160789.1
(22) Date of filing: 28.02.2025
(51) Int. Cl.: G06N 20/00

(54) **ANNOTATION METHOD AND COMPUTER PROGRAM**

(30) Priority: 05.03.2024 JP 2024033203; 27.02.2025 JP 2025030290
(71) Applicant: SCREEN Holdings Co., Ltd., Kyoto-shi, Kyoto 602-8585 (JP)
(72) Inventor: OKAYAMA, Toshiyuki, Kyoto, 602-8585 (JP); HORIDE, Kenta, Kyoto, 602-8585 (JP); CHATANI, Sota, Kyoto, 602-8585 (JP)
(74) Representative: Goddar, Heinz J.

(57) **Abstract**

A sample-data presentation step of presenting sample data 9s to a user, a labelling step in which a user labels the sample data 9s, and an evaluation value calculation step of calculating an evaluation value in a feature value space S are repeated. Then, in the sample-data presentation step in second and subsequent series of the steps, data 9 with the highest evaluation value calculated in the clustering step in a previous series is presented as the sample data 9s. In this manner, in the sample-data presentation step in second and subsequent series, the data 9 having a different feature from that of the sample data 9s presented in the sample-data presentation step in the previous series can be presented. This can prevent features of the sample data 9s to be presented to the user, from being imbalanced.

## Description

### BACKGROUND OF THE INVENTION

### Field of the Invention

The present invention relates to a technology for preparing a labelled dataset for machine learning.

### Description of the Background Art

For supervised machine learning such as deep learning, many pieces of training data are required. For example, in creating a learned model for image recognition, it is required to prepare many pieces of image data as training data. In order to prepare training data, a user assigns a label indicating a correct recognition result to each of many pieces of image data. Such a process of labelling each piece of data is referred to as "annotation".

A conventional technology regarding annotation is described in, for example, Japanese Patent Application Laid-Open No. 2023-52502.

Annotation is a process of labelling many pieces of data one by one, and thus poses a heavy burden on a user. In order to lighten the workload of a user for annotation, semi-supervised learning is used, as conventionally known.

In a case in which semi-supervised learning is used, first, a user labels sample data that is a selected part of many pieces of data. Then, a learned model is created on the basis of the labelled sample data. After that, a remaining part of the data is labelled using the learned model. This can lighten the workload of the user for annotation.

However, in semi-supervised learning, an imbalance occurs in selecting sample data from many pieces of data in some cases. Then, an imbalance in sample data causes such a problem that a label cannot be accurately estimated with a learned model.

### SUMMARY OF THE INVENTION

In view of this, it is an object of the present invention to provide a technology that can prevent features of sample data to be presented to a user, from being imbalanced.

To solve the above-described problem, the first invention of the present application is directed to an annotation method for preparing a labelled dataset by assigning a label for machine learning to each of multiple pieces of data included in the dataset, wherein a computer repeatedly performs a series of a sample-data presentation step of presenting sample data selected from the dataset, to a user, a labelling step of assigning a label input by the user, to the sample data, and an evaluation value calculation step of calculating an evaluation value in the feature value space, based on the label, after performing a feature extraction step of calculating feature values of the multiple pieces of data, and a feature-value-space creation step of creating the feature value space on the basis of the feature values. In the sample-data presentation step in second and subsequent series of the steps, data with the higher evaluation value calculated in the evaluation value calculation step in a previous series of the steps is presented as the sample data.

The second invention of the present application is directed to the annotation method according to the first invention, wherein the computer further performs a semi-supervised learning step of performing semi-supervised learning, to label remaining data of the dataset, after partial data of the dataset is labelled by repeating the sample-data presentation step, the labelling step, and the evaluation value calculation step.

The third invention of the present application is directed to the annotation method according to the second invention, wherein the computer further performs a learning step of performing supervised learning using the multiple pieces of data that have been labelled, to create a learned model, after the semi-supervised learning step, a loss calculation step of inputting the multiple pieces of data to the learned model and calculating a loss indicating lowness of reliability of an estimated value output from the learned model, for each of the pieces of data, and a data selection step of selecting a data group in which the loss is low, from the dataset.

The fourth invention of the present application is directed to the annotation method according to the third invention, wherein the computer performs clustering of the multiple pieces of data according to the losses and selecting a cluster in which the loss is low, as the data group, in the data selection step.

The fifth invention of the present application is directed to the annotation method according to the fourth invention, wherein the computer performs the clustering of the multiple pieces of data by the k-means method or the DBSCAN method in the data selection step.

The sixth invention of the present application is directed to a computer program that causes the computer to perform the annotation method according to any of the first to fifth inventions.

According to the first to sixth inventions of the present application, in the sample-data presentation step in the second and subsequent series of the steps, data having a feature different from that of the sample data presented in the sample-data presentation step in the previous series of the steps can be presented. This can prevent features of the sample data to be presented to the user, from being imbalanced.

Especially, according to the second invention of the present application, all the pieces of data can be labelled without a need for the user to perform a process of labelling all the pieces of data.

Especially, according to the third invention of the present application, a data group with a highly-reliable label can be selected from the multiple pieces of data included in the dataset.

Especially, according to the fifth invention of the present application, the user can perform clustering with superior robustness and processing speed.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a view showing a configuration of a computer that performs an annotation method;
Fig. 2 is a flowchart showing a process flow of annotation;
Fig. 3 is a view showing an example of a dataset;
Fig. 4 is a view showing an example of a result of feature extraction;
Fig. 5 is a view showing an example of a result of dimensionality reduction;
Fig. 6 is a view showing an example of a feature value space;
Fig. 7 is a flowchart showing a process flow of labelling of sample data according to a first embodiment;
Fig. 8 is a view showing how clustering is performed in the feature value space according to the first embodiment;
Fig. 9 is a view showing how clustering is performed in the feature value space according to the first embodiment;
Fig. 10 is a flowchart showing a process flow of semi-supervised learning; and
Fig. 11 is a flowchart showing a process flow of selection of clean data.
Fig. 12 is a flowchart showing a process flow of labelling of sample data according to a second embodiment;
Fig. 13 is a view showing how evaluation value calculation is performed in the feature value space according to the second embodiment;
Fig. 14 is a view showing how evaluation value calculation is performed in the feature value space according to the second embodiment;

### DESCRIPTION OF THE PREFERRED EMBODIMENTS

Hereinafter, a preferred embodiment of the present invention will be described with reference to the drawings.

### <1. Configuration of Computer>

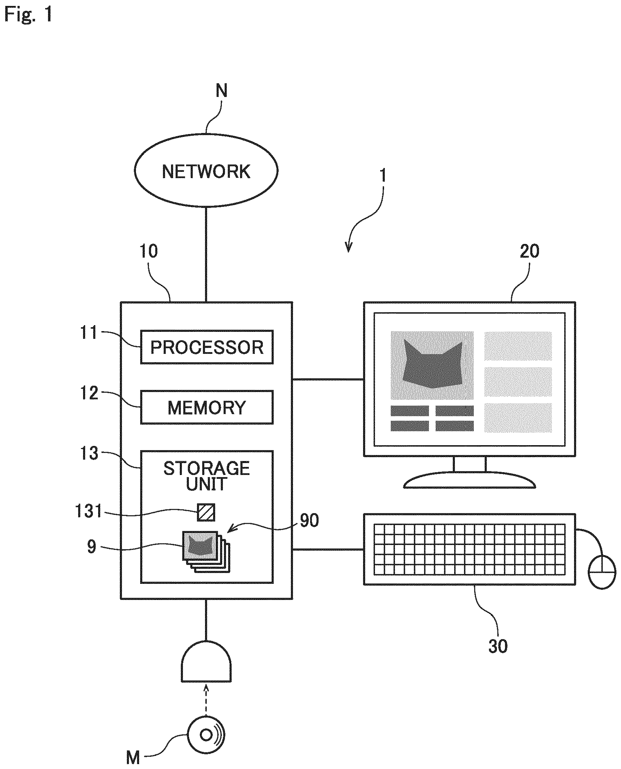

Fig. 1 is a view showing a configuration of a computer 1 that performs an annotation method according to one preferred embodiment of the present invention. The computer 1 is a system for annotating each of multiple pieces of data 9 in order to make a dataset 90 including the multiple pieces of data 9 usable as training data for supervised machine learning. Annotation is a process of assigning a label that is information to be learned, to each of the multiple pieces of data 9 included in the dataset 90. In the present embodiment, it is assumed that each of the pieces of data 9 of the dataset 90 is image data.

As shown in Fig. 1, the computer 1 includes a computer main body 10, a display unit 20, and an input unit 30.

The computer main body 10 is an information processing device that performs various kinds of processing regarding annotation. The computer main body 10 includes a processor 11 such as a CPU or a GPU, a memory 12 such as a RAM, and a storage unit 13 such as a hard disk drive.

In the storage unit 13, a computer program 131 is stored. The computer program 131 is application software that causes the computer main body 10 to perform various kinds of processing regarding annotation. The computer program 131 is read out from a storage medium M such as a CD or a DVD and is installed on the computer main body 10. Alternatively, the computer program 131 may be downloaded to the computer main body 10 via a network N such as the Internet.

The display unit 20 is a device configured to display various kinds of information output from the computer main body 10. For the display unit 20, for example, a liquid crystal display is used. The input unit 30 is a device configured to input various kinds of information to the computer main body 10. For the input unit 20, for example, a keyboard or a mouse is used. Note that the display unit 20 and the input unit 30 may be implemented by a single device such a touch panel display. The display unit 20 and the input unit 30 are electrically connected to the computer main body 10.

### <2. Annotation according to a first embodiment >

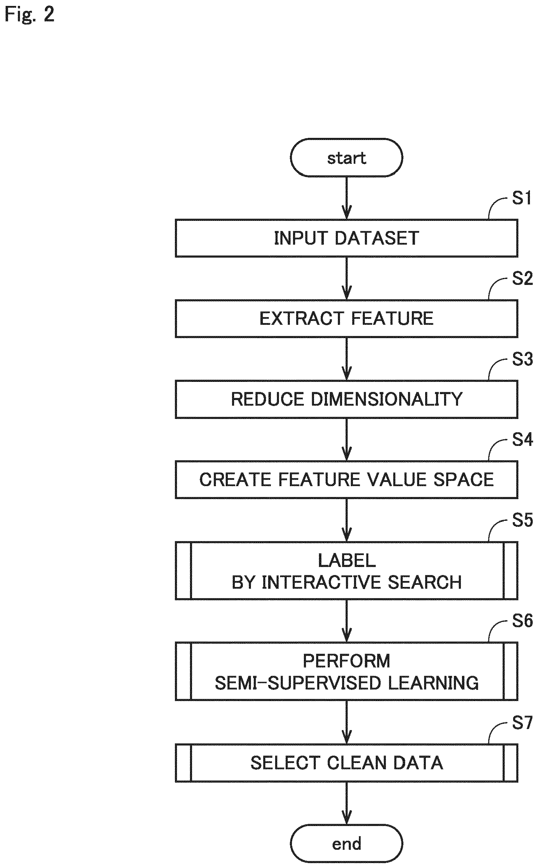

Next, a process for annotation using the above-described computer 1 according to a first embodiment is described. Fig. 2 is a flowchart showing a process flow of annotation. The computer 1 reads out the computer program 131 stored in the storage unit 13 and loads the computer program 131 into the memory 12. Then, the processor 11 performs computational processing in accordance with the computer program 131, to thereby perform the process in Fig. 2.

In performing annotation, first, the dataset 90 to be annotated is input to the computer 1 (step S1). The dataset 90 is input to the computer 1 via, for example, the network N, and is stored in the storage unit 13 of the computer 1. Alternatively, the dataset 90 may be one that is created in the computer 1 and stored in the storage unit 13.

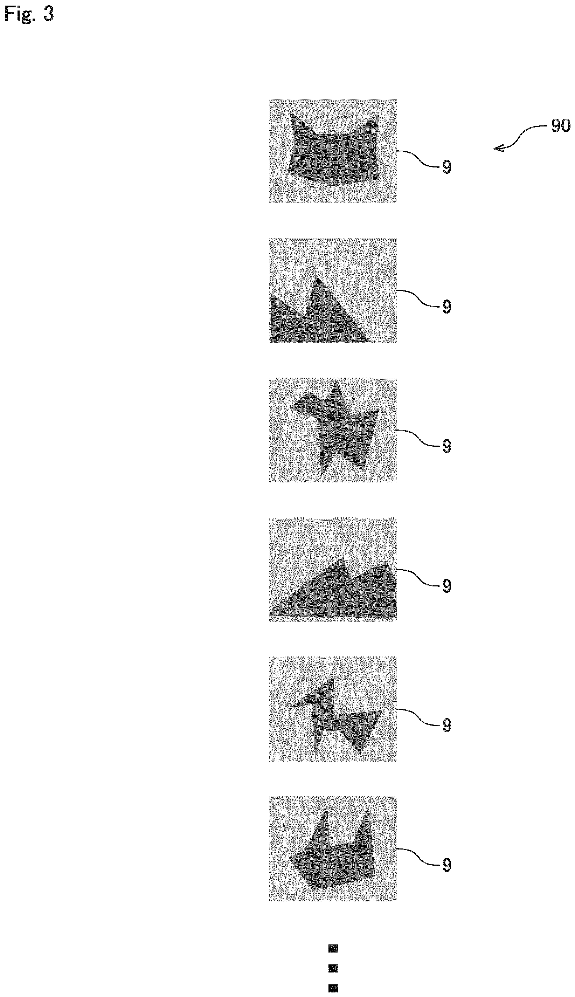

Fig. 3 is a view showing an example of the dataset 90. As shown in Fig. 3, the dataset 90 includes the multiple pieces of data 9. The multiple pieces of data 9 are data of different images, respectively.

The computer 1 reads out the dataset 90 from the storage unit 13. Then, the computer 1 performs feature extraction on the multiple pieces of data 9 of the dataset 90 (step S2: feature extraction step). Specifically, a feature value f of each of the pieces of data 9 is calculated by a neural network algorithm, an autocorrelation algorithm, a geometric feature extraction algorithm, a moment feature extraction algorithm, or an algorithm using pixel values. Note that the algorithm for the feature extraction is not limited to the examples described above. Further, a plurality of algorithms may be combined with each other for use in the feature extraction.

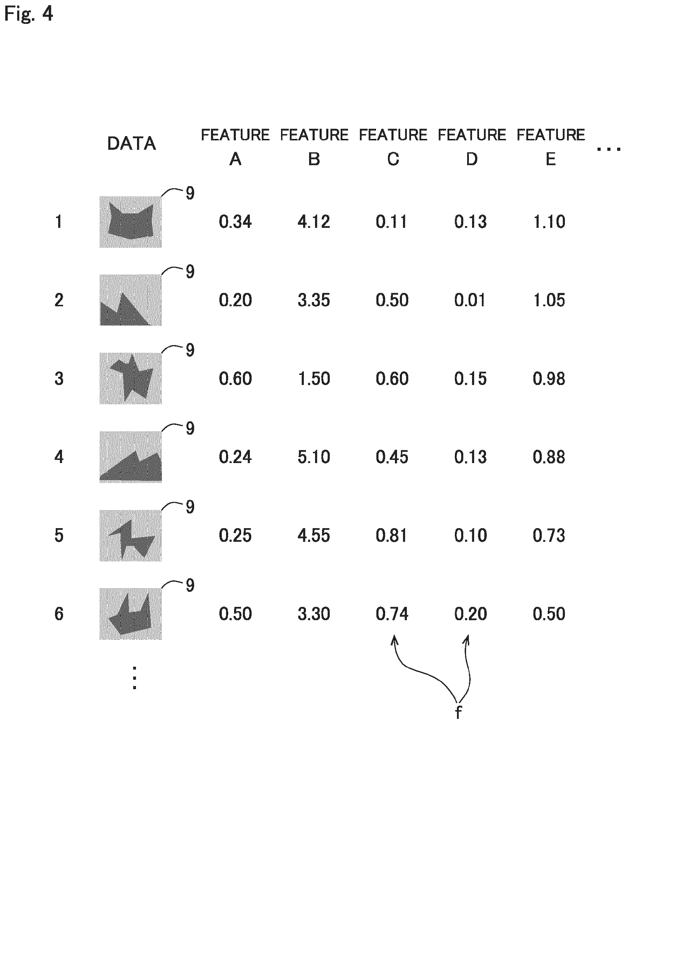

Fig. 4 is a view showing an example of a result of the feature extraction. By the feature extraction, a plurality of feature values f are calculated for each of the pieces of data 9 as shown in Fig. 4. The feature value f is numerical information indicating intensity of a certain feature of the data 9. In the example shown in Fig. 4, the feature values f of a plurality of features A, B, C, and so forth that are different from each other are calculated for one piece of data 9. Hereinafter, the number of the features A, B, C, and so forth will be referred to as a "dimension". The computer 1 calculates the feature value f that is multi-dimensional (for example, 100-dimensional), for each of the pieces of data 9.

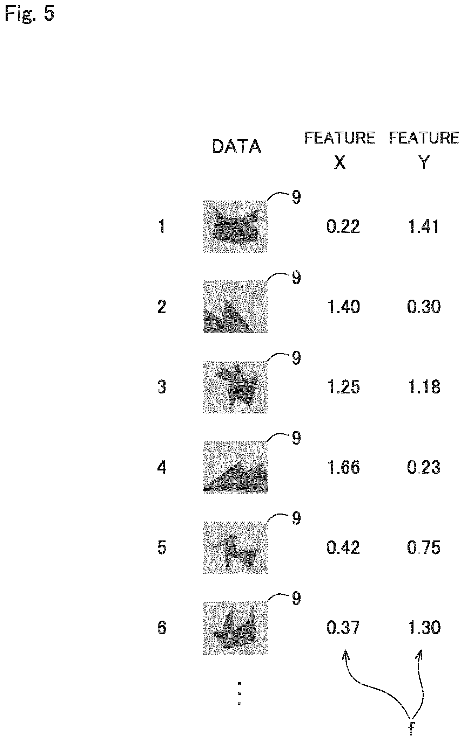

Subsequently, the computer 1 reduces the dimensionality of the feature value f (step S3). Fig. 5 is a view showing an example of a result of the dimensionality reduction. In this example, the many features A, B, C, and so forth shown in Fig. 4 are reduced to two features X and Y shown in Fig. 5. The two features X and Y may be two features selected from the many features A, B, C, and so forth in Fig. 4, or may be features that reflect some features included in the many features A, B, C, and so forth.

It is preferred that the features X and Y after the dimensionality reduction have the feature values f that are widely distributed so that the multiple pieces of data 9 do not densely gather in a feature value space S described later. Specifically, it is preferred that the mean of distribution of the feature values f of the features X and Y after the dimensionality reduction be larger than that of the features A, B, C, and so forth before the dimensionality reduction.

In the example in Fig. 5, the dimensionality of the feature value f is reduced to two dimensions. Note that the dimensionality after the dimensionality reduction is not limited to two dimensions, but may be one dimension, three dimensions, four dimensions, or the like. That is, the dimensionality after the dimensionality reduction is only required to be smaller than that before the dimensionality reduction. The dimensionality reduction lightens a computational burden on the computer 1 for processes in the next step S4 and thereafter.

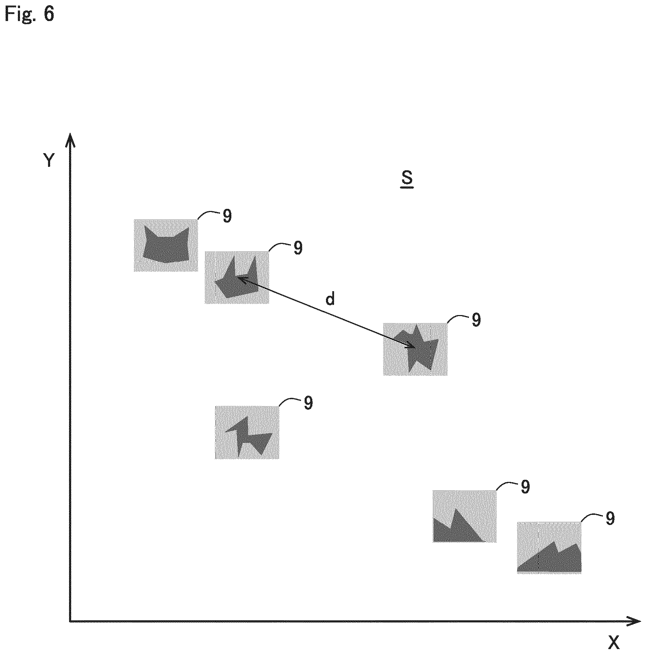

Then, the computer 1 creates the feature value space S on the basis of the features X and Y after the dimensionality reduction (step S4: feature-value-space creation step). Fig. 6 is a view showing an example of the feature value space S. In the example in Fig. 6, a two-dimensional feature value space S is defined on the basis of the features X and Y. Thus, in the example in Fig. 6, an X axis of the feature value space S represents the feature value f of the feature X, and a Y axis of the feature value space S represents the feature value f of the feature Y.

The feature value space S is created in accordance with the dimensionality of the feature value f after the dimensionality reduction. Thus, as the feature value f after the dimensionality reduction is three-dimensional, four-dimensional, and so forth, the feature value space S is accordingly a three-dimensional space, a four-dimensional space, and so forth. Meanwhile, in a case in which the feature value f after the dimensionality reduction is one-dimensional, the feature value space S is accordingly a one-dimensional space (number line).

As shown in Fig. 6, the computer 1 performs mapping of each of the pieces of data 9 in the feature value space S. For example, the first one of the pieces of data 9 in Fig. 5 is mapped at coordinates (X = 0.22, Y = 1.41) in the feature value space S. The computer 1 performs mapping of all the pieces of data 9 of the dataset 90 in the feature value space S in accordance with the feature values f thereof.

Subsequently, the computer 1 labels a part of the data 9 of the dataset 90 by interactive search (step S5: interactive labelling step). In the step S5, the computer 1 presents a part of the data 9 of the dataset 90 to a user, and labels the part of the data 9 in accordance with an input provided by the user.

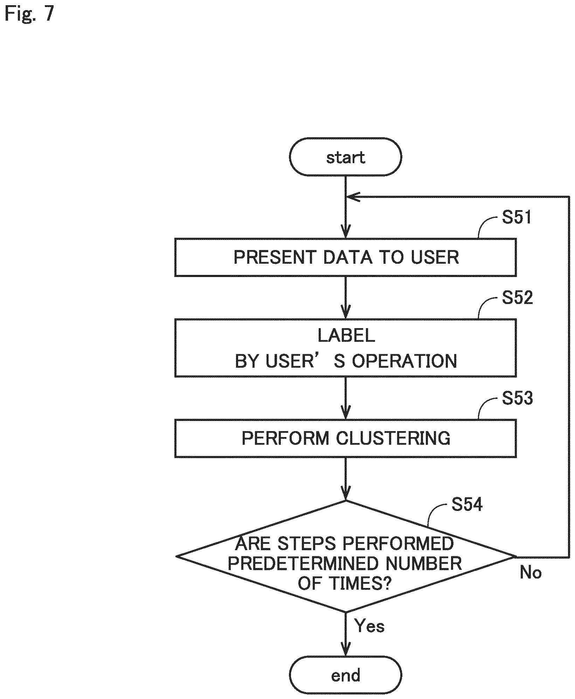

Fig. 7 is a flowchart showing a detailed process flow of the step S5. In the step S5, the computer 1 first selects one piece of data 9 (hereinafter referred to as "sample data 9s") in the dataset 90, and presents the sample data 9s to the user (step S51: sample-data presentation step). Specifically, the computer 1 presents one piece of sample data 9s on the display unit 20.

The user operates the input unit 30 while checking the sample data 9s displayed on the display unit 20, to input a label to be assigned to the sample data 9s. The computer 1 assigns the label input by the user, to the sample data 9s (step S52: labelling step).

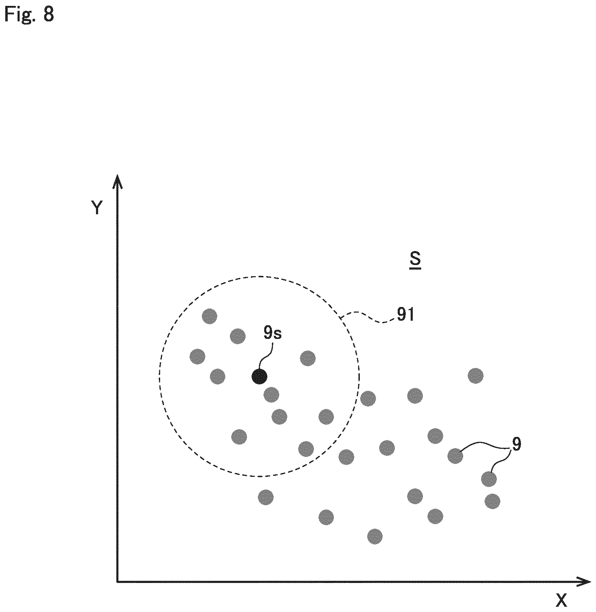

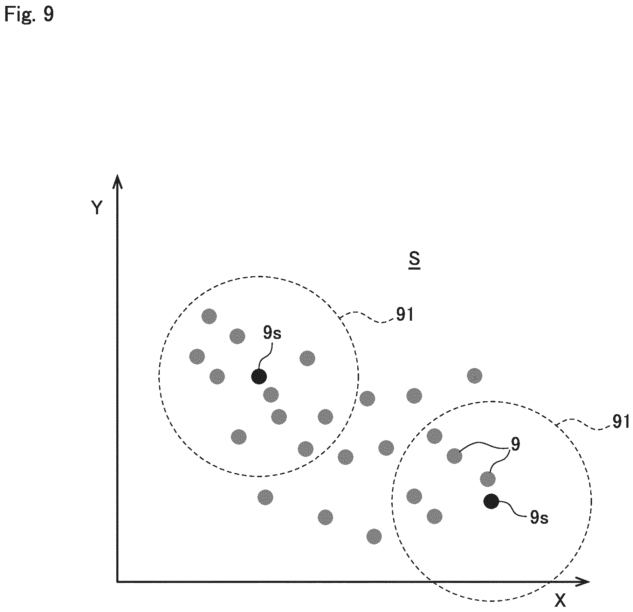

Subsequently, the computer 1 performs clustering on the feature value space S (step S53: clustering step). The clustering can be performed by a non-parametric estimation method such as, for example, kernel density estimation, a parametric estimation method, or the like. Fig. 8 and Fig. 9 are views showing how the clustering is performed on the feature value space S. In Fig. 8 and Fig. 9, a gray dot represents the data 9 that is not labelled. Meanwhile, in Fig. 8 and Fig. 9, a black dot represents the sample data 9s that has been labelled.

The computer 1 calculates a range of a cluster 91 including the sample data 9s in the feature value space S. For example, as shown in Fig. 8, a range with a predetermined length centered at the sample data 9s is defined as one cluster 91. The data 9 belonging to the cluster 91 has a feature similar to that of the sample data 9s. Hence, the data 9 belonging to the cluster 91 is highly likely to be one to which the same label as that of the sample data 9s should be assigned.

When the number of times the steps S51 to S53 are performed is smaller than a predetermined number of times (No in the step S54), the computer 1 repeats a series of processes of the steps S51 to S53. Then, in the step S51 in second and subsequent series of processes, the computer 1 presents the data 9 located out of the range of the cluster 91 calculated in the step S53 in the previous series of the processes, as the sample data 9s.

For example, the computer 1 sets the farthest data 9 from the previous cluster 91 (the cluster 91 shown in Fig. 8) as new sample data 9s in the feature value space S as shown in Fig. 9. Then, the computer 1 performs the steps S52 to S53 again on the new sample data 9s, to calculate a range of a new cluster 91 including the new sample data 9s.

Thus, in the step S5, presentation of the sample data 9s by the computer 1 and labelling by the user's operation are repeated. At that time, the computer 1 sets the data 9 located out of the range of the cluster 91 including the previous sample data 9s, as next sample data 9s. In this manner, the computer 1 can present the data 9 having a different feature from that of the previous sample data 9s, as the next sample data 9s, to the user. This makes it possible to prevent features of the sample data 9s to be presented to the user, from being imbalanced. Consequently, labels assigned to the sample data 9s can be prevented from being imbalanced.

After a while, when the number of times the steps S51 to S53 are performed reaches the predetermined number of times (Yes in the step S54), the computer 1 ends the process of the step S5. Thus, the dataset 90 is placed in a state in which the dataset 90 includes a partial part composed of labelled sample data 9s and the other major part composed of un-labelled data 9.

Then, the computer 1 performs semi-supervised learning on the dataset 90 (step S6: semi-supervised learning step). Thus, the computer 1 labels the data 9 that has not been labelled in the dataset 90.

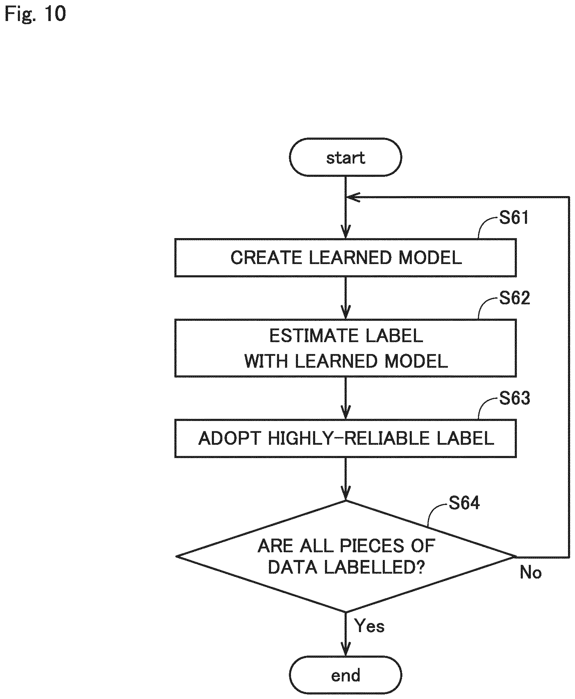

Fig. 10 is a flowchart showing a process flow of the semi-supervised learning. As shown in Fig. 10, the computer 1 first creates a learned model (first learned model) on the basis of the labelled sample data 9s (step S61: first learning step). Specifically, the computer 1 creates a learned model using only the sample data 9s that is labelled in the step S5 in the dataset 90, as training data. The learned model is a model that receives the data 9 and outputs an estimated value of a label to be assigned to the data 9. As described above, the pieces of the sample data 9s are selected so uniformly in the feature value space S that labels thereof are not imbalanced. Thus, it is possible to accurately create a learned model on the basis of the multiple pieces of sample data 9s.

Subsequently, the computer 1 inputs the data 9 that is not labelled in the step S5 in the dataset 90, to the learned model. As a result, the learned model outputs an estimated value of a label. Thus, a label of the data 9 can be estimated (step S62: label estimation step).

Further, the learned model outputs the reliability of the estimated value, together with the estimated value of the label. The computer 1 determines whether to adopt the label on the basis of the reliability output from the learned model. Specifically, when the reliability output from the learned model is equal to or higher than a predetermined threshold value, the output label is adopted (step S63). In this case, the label output from the learned model is assigned to the data 9 input to the learned model. On the other hand, when the reliability output from the learned model is lower than the predetermined threshold value, the label output from the learned model is not assigned to the data 9 input to the learned model.

After that, the process flow returns back to the step S61, where the computer 1 creates a learned model again. In the step S61 in second and subsequent series of the processes, not only the sample data 9s that is labelled in the step S51, but also the data 9 that is labelled in the step S63 is included in the training data, and a learned model is created. This is then followed by the processes of the step S62 and S63 performed on the data 9 that has not yet been labelled.

The computer 1 repeats the processes of the step S61 to S63 until all the pieces of data 9 of the dataset 90 are labelled (No in the step S64). Then, when all the pieces of data 9 of the dataset 90 are labelled (Yes in the step S64), the computer 1 ends the semi-supervised learning of the step S6.

Thus, by the semi-supervised learning, the computer 1 uses the labels assigned to the sample data 9s corresponding to a part of the dataset 90 in labelling the data 9 corresponding to the remaining part of the dataset 90. This eliminates a need for the user to perform a process of labelling all the pieces of data 9 of the dataset 90. Therefore, the workload of the user for labelling can be lightened.

However, in the semi-supervised learning, an incorrect label is assigned to a part of the data 9 in some cases. Hereinafter, in the dataset 90 having been subjected to the semi-supervised learning, the data 9 to which a correct label is assigned will be referred to as "clean data 9c", and the data 9 to which an incorrect label is assigned will be referred to as "noise data 9n". In order to obtain the dataset 90 with a highly-accurate label, it is required to select the clean data 9c from the many pieces of data 9.

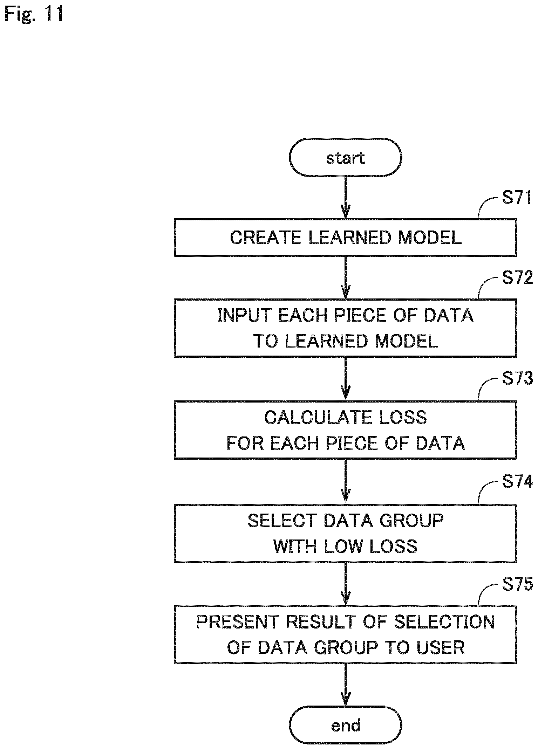

To this end, the computer 1 selects the clean data 9c using a learned model after the semi-supervised learning (step S7: clean-data selection step). Fig. 11 is a flowchart showing a process flow of selection of the clean data 9c.

As shown in Fig. 11, in the step S7, the computer 1 first performs supervised learning using all the pieces of data 9 that are labelled by the semi-supervised learning, as training data, to thereby create a learned model (second learned model) (step S71: second learning step). The learned model to be created is a model that receives the data 9 and outputs an estimated value of a label.

The training data used for creating the learned model includes both the clean data 9c and the noise data 9n. Note that the number of pieces of the clean data 9c is larger than the number of pieces of the noise data 9n. Hence, the learned model to be created is a model that reflects the label of the clean data 9c more clearly than the label of the noise data 9n.

Subsequently, the computer 1 inputs each of the pieces of data 9 of the dataset 90 to the learned model created in the step S71 (step S72: data input step). As a result, the learned model outputs an estimated value of a label. Further, the learned model outputs the reliability of the estimated value, together with the estimated value of the label, for each of the pieces of data 9. The computer 1 calculates a loss from the reliability output from the learned model, for each of the pieces of data 9 (step S73: loss calculation step).

The loss is a numerical value indicating the lowness of reliability of an estimated value output from the learned model. The lower the reliability of an estimated value output from the learned model, the higher the value of a loss. The loss can be calculated by a loss function such as, for example, a cross-entropy error function.

As described above, the learned model reflects the label of the clean data 9c more clearly than the label of the noise data 9n. For this reason, the loss regarding the clean data 9c is low whereas the loss regarding the noise data 9n is high. The computer 1 selects a data group with a low loss from the dataset 90 (step S74: data selection step). Thus, the clean data 9c to which a reliable label is assigned can be selected from the multiple pieces of data 9 included in the dataset 90.

Alternatively, the computer 1 may calculate a loss for each of the pieces of data 9 a plurality of times by repeatedly performing the above-described steps S71 to S73. Then, the computer 1 may deal with the plurality of losses for the multiple pieces of data 9 in the form of a matrix. For example, there may be formed a matrix with N rows and M columns in which losses regarding N pieces of the data 9, obtained by calculation in which a series of the steps of S71 to S73 is performed once, are arranged along a row direction, and results of calculations in which a series of the steps S71 to S73 is repeated M times are arranged along a column direction. Then, the computer 1 may perform the data selection step of the step S74 using the formed matrix.

Further, in the step S74, the computer 1 may perform clustering of the multiple pieces of data 9 according to the losses. Then, the computer 1 may select a cluster with a low loss as a data group of the clean data 9c. By using the clustering, it is possible to more easily select the clean data 9c from the many pieces of data 9.

In a case in which the clustering is used, the computer 1, for example, classifies the multiple pieces of data 9 into two types of clusters of the clean data 9c and the noise data 9n. Alternatively, the computer 1 may classify the multiple pieces of data 9 into more types of clusters. Then, the computer 1 may select a cluster with a minimum loss as a data group of the clean data 9c.

As a method for the clustering, for example, the k-means method or the DBSCAN method can be used. In this regard, in the k-means method, the user is required to specify the cluster number hyperparameter. In contrast thereto, in the DBSCAN method, the user is not required to specify the number of clusters. Hence, by using the DBSCAN method, it is possible to further lighten the workload of the user. In terms of robustness and processing speed, the k-means method is superior.

Moreover, the computer 1 may return back to the step S71 after the step S74 and create a learned model again on the basis of the data group selected in the step S74. Then, the computer 1 may perform the processes of the steps S72 to S74 again using the re-created learned model. Thus, by repeating the processes of the steps S71 to S74 a plurality of times, it is possible to obtain a data group with a more reliable label.

After that, the computer 1 presents a result of selection of the data group in the step S74, to the user (step S75: result presentation step). Specifically, the computer 1 presents the selected data group on the display unit 20. For example, the computer 1 displays the selected data group and the non-selected data group separately from each other. Alternatively, the computer 1 may display the multiple pieces of data 9, together with numerical values of their reliability or losses, in a list form.

### <2. Annotation according to a second embodiment >

Next, a process for annotation using the above-described computer 1 according to a second embodiment is described. In this second embodiment, the interactive labelling process (step S5) differs from the first embodiment described above. Therefore, only the interactive labelling process (step S5A) of the second embodiment will be explained below.

In the interactive labelling process (step S5A) of the second embodiment, the computer 1 labels a part of the data 9 of the dataset 90 by interactive search. In the step S5 A, the computer 1 presents a part of the data 9 of the dataset 90 to a user, and labels the part of the data 9 in accordance with an input provided by the user.

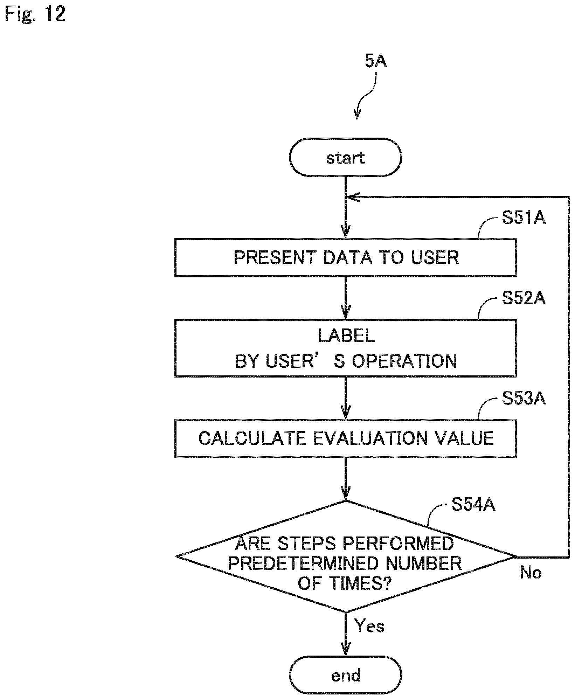

Fig. 12 is a flowchart showing a detailed process flow of the step S5A. In the step S5A, the computer 1 first selects one piece of data 9 (hereinafter referred to as "sample data 9s") in the dataset 90, and presents the sample data 9s to the user (step S51A: sample-data presentation step). Specifically, the computer 1 presents one piece of sample data 9s on the display unit 20.

The user operates the input unit 30 while checking the sample data 9s displayed on the display unit 20, to input a label to be assigned to the sample data 9s. The computer 1 assigns the label input by the user, to the sample data 9s (step S52A: labelling step).

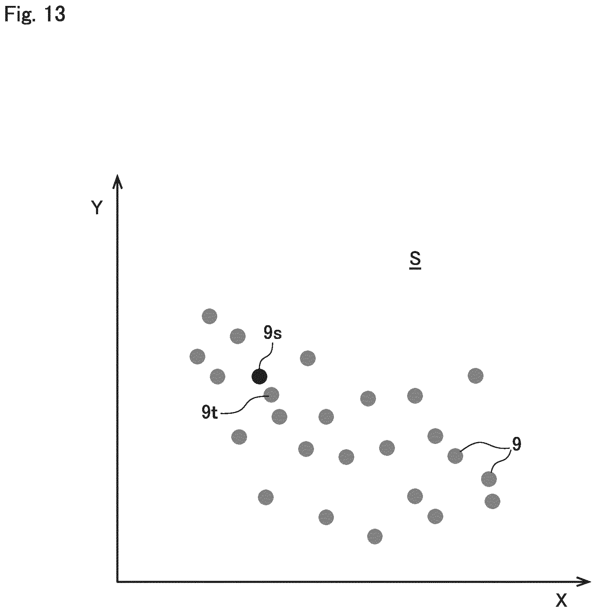

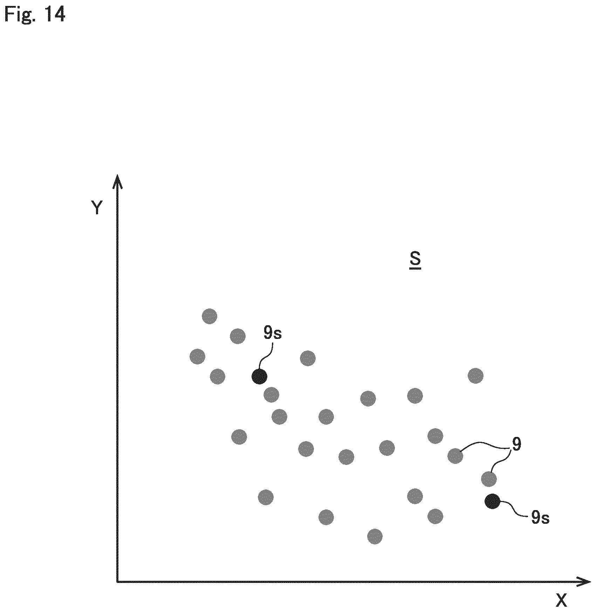

Subsequently, the computer 1 performs evaluation value calculation on the feature value space S (step S53A: evaluation value calculation step). The evaluation value calculation can be performed by a non-parametric estimation method such as, for example, kernel density estimation, a parametric estimation method, or the like. Fig. 13 and Fig. 14 are views showing how the evaluation value calculation is performed on the feature value space S. In Fig. 13 and Fig. 14, a gray dot represents the data 9 that is not labelled. Meanwhile, in Fig. 13 and Fig. 14, a black dot represents the sample data 9s that has been labelled.

The computer 1 calculates a evaluation value of all dots in the feature value space S. For example, as shown in Fig. 13, sample data 9t that is close in distance to the sample data 9s has similar characteristics to the sample data 9s. Therefore, there is a high probability that the data 9t should be assigned the same label as the sample data 9s. In this case, a two-dimensional negative Gaussian distribution is considered with the sample data 9s at the center, and the value of the Gaussian distribution is taken as the evaluation value. In this case, the further away the dots are from the sample data 9s, the higher the evaluation value becomes.

The evaluation value may be calculated using a method other than the one described above. The above method for calculating the evaluation value is just one example based on kernel density estimation for non-parametric estimation. The method for calculating the evaluation value is not limited to non-parametric estimation or parametric estimation.

When the number of times the steps S51A to S53A are performed is smaller than a predetermined number of times (No in the step S54A), the computer 1 repeats a series of processes of the steps S51A to S53A. Then, in the step S51A in second and subsequent series of processes, the computer 1 presents the data 9 with the higher evaluation value calculated in the step S53A in the previous series of the processes, as the sample data 9s. Specifically, the computer 1 presents the data 9 selected from weighted random using the evaluation value calculated in the step S53A in the previous series of the processes, as the sample data 9s. Weighted random is a random selection method in which data with larger evaluation values are more likely to be selected.

For example, the computer 1 sets the data9 that is farther from labelled sample data 9 in terms of features as new sample data 9s in the feature value space S as shown in Fig. 14. Then, the computer 1 performs the steps S52A to S53A again on the new sample data 9s, to calculate new evaluation values for each dot including the new sample data 9s.

Thus, in the step S5A, presentation of the sample data 9s by the computer 1 and labelling by the user's operation are repeated. At that time, the computer 1 calculates the evaluation value from all previously labelled sample data, and selects the next sample data 9s by the weighted random using the evaluation value. In this manner, the computer 1 can present the data 9 having a different feature from that of the previous sample data 9s, as the next sample data 9s, to the user. This makes it possible to prevent features of the sample data 9s to be presented to the user, from being imbalanced. Consequently, labels assigned to the sample data 9s can be prevented from being imbalanced.

After a while, when the number of times the steps S51A to S53A are performed reaches the predetermined number of times (Yes in the step S54A), the computer 1 ends the process of the step S5A. Thus, the dataset 90 is placed in a state in which the dataset 90 includes a partial part composed of labelled sample data 9s and the other major part composed of un-labelled data 9.

In the second embodiment, the evaluation value is a value approximating the probability density. Therefore, in the interactive labelling process (step S5A), the data 9 can be selected as the next sample data 9s, from among the data 9 that has not been annotated, those that are highly likely to belong to a small number of classes that have not yet been annotated. Then, when the sample data 9s is annotated, the evaluation value is calculated again, and the probability density distribution is updated

### <4. Modifications>

Hereinabove, the preferred embodiment of the present invention has been described, but the present invention is not limited to the above-described preferred embodiment. Below, description is given about various modifications, focusing on differences from the above-described preferred embodiment.

In the above-described preferred embodiment, the dimensionality reduction of the step S3 is performed after the feature extraction of the step S2. Alternatively, in a case in which there are sufficient computational resources of the computer 1, the dimensionality reduction of the step S3 may be omitted. In such a case, the feature value space S may be created in the step S4 by using the full-dimensional feature value f extracted in the step S2.

Further, in the above-described preferred embodiment, description has been given about a case in which the multiple pieces of data 9 of the dataset 90 are image data. However, the data 9 is not limited to image data, and may be video data, audio data, and the like.

Moreover, with regard to details of the data presentation method and the annotation method described above, appropriate modifications and partial omissions are possible within a scope not departing from the gist of the present invention. Furthermore, the respective elements described in the above-described preferred embodiment and modifications may be appropriately combined unless contradiction occurs.

While the invention has been shown and described in detail, the foregoing description is in all aspects illustrative and not restrictive. It is therefore understood that numerous modifications and variations can be devised without departing from the scope of the invention.

## Claims

1. An annotation method for preparing a labelled dataset (90) by assigning a label for machine learning to each of multiple pieces of data (9) included in a dataset (90), comprising the steps of:
a) a feature extraction step of calculating feature values (f) of the multiple pieces of data (9);
b) a feature-value-space creation step of creating a feature value space (S) on the basis of the feature values (f);
c) a sample-data presentation step of presenting sample data (9s) selected from the dataset (90), to a user;
d) a labelling step of assigning a label input by the user, to the sample data (9s); and
e) an evaluation value calculation step of calculating an evaluation value in the feature value space (S), based on the label, wherein
the steps a) to e) are performed by a computer (1),
the computer (1) repeatedly performs a series of the steps c), d), and e) after performing the steps a) and b), and
in the step c) in second and subsequent series, data (9) with the higher evaluation value calculated in the step e) in a previous series of the steps is presented as the sample data (9s).

2. The annotation method according to claim 1, further comprising the step of
f) a semi-supervised learning step of performing semi-supervised learning, to label remaining data (9) of the dataset (90), after partial data (9) of the dataset (90) is labelled by repeating the steps c), d), and e), wherein
the step f) is performed by the computer (1).

3. The annotation method according to claim 2, further comprising the steps of:
g) a learning step of performing supervised learning using the multiple pieces of data (9) that have been labelled, to create a learned model, after the step f);
h) a loss calculation step of inputting the multiple pieces of data (9) to the learned model and calculating a loss indicating lowness of reliability of an estimated value output from the learned model, for each of the pieces of data (9); and
i) a data selection step of selecting a data group in which the loss is low, from the dataset (90), wherein
the steps g) to i) are performed by the computer (1).

4. The annotation method according to claim 3, wherein the computer (1) performs clustering of the multiple pieces of data (9) according to the losses and selecting a cluster in which the loss is low, as the data group, in the step i).

5. The annotation method according to claim 4, wherein the computer (1) performs the clustering of the multiple pieces of data (9) by the k-means method or the DBSCAN method in the step i).

6. A computer program that causes the computer (1) to perform the annotation method according to any one of claims 1 to 5.
